# EUROPEAN PATENT APPLICATION

(11) **EP 1 367 559 A2**
(43) Date of publication of application: **03.12.2003**
(21) Application number: 03076475.7
(22) Date of filing: 19.05.2003
(51) Int. Cl.: G09G 5/00

(54) **Driver circuit for and method of driving an emissive video matrix display**

(30) Priority: 30.05.2002 US 158518
(71) Applicant: EASTMAN KODAK COMPANY, Rochester, New York 14650 (US)
(72) Inventor: Funston, David L., Rochester, New York 14650-2201 (US); Compton, John T., Rochester, New York 14650-2201 (US)
(74) Representative: Haile, Helen Cynthia

(57) **Abstract**

In accordance with one aspect of the present invention, what is provided is a method for displaying an image using an active matrix display of picture elements that radiate light in response to the application of electrical power. In this method, a display mode is selected from at least a first and a second mode. The image is presented on the display when the first mode is selected and the image is presented in a modified form when a second mode is selected. The image is modified so that presenting the image in the second mode consumes less power than presenting the image in the first mode.

In another aspect what is provided is an image display driver for a matrix display of picture elements that radiate light in response to the application of power. The driver has a signal processor for receiving an image and processing the image for presentation on the display in accordance one of at least a first mode and a second mode. The signal processor modifies the appearance of the image as presented in the second mode so that the presentation of the image in the second mode consumes less power than the presentation of the same image in the first mode. A device controller is provided. The device controller determines display mode for displaying the image and generating a display mode selection signal. The signal processor processes the image in a mode indicated by the display mode selection signal.

## Description

The present invention relates to a display driver and method for operating an emissive light video display.

Video displays are an important feature of electronic devices such as cellular telephones, global positioning systems (GPS), CD players, video cameras, digital cameras, hybrid cameras and other devices. Such video displays are typically formed from a two dimensional matrix of image elements. In a preferred form of video display known as the emissive light display, the image forming elements comprise discrete light emitting elements. An image to be displayed using an emissive light display is electronically captured and encoded into illumination values. The illumination values are written to the elements of the display and the elements illuminate at an intensity level that is called for in the illumination values. The intensity of light emitted by the elements varies within a range of observable intensity levels. The variations in intensity form a contrast pattern on the display that takes on the appearance of the image.

The emissive light display technologies of the prior art, such as the ubiquitous cathode ray tube and the electroluminescent display consume substantial amounts of power when displaying images. The energy requirements of such displays typically outstrip the power supply capacity of such portable electronic devices. Because of this, emissive light displays have not often been used in circumstances where it is desirable to present images in a lower power manner such as in portable electronic devices.

A new form of emissive light display technology, the organic light emissive display, has been developed which provides elements that emit light over a desired range of illumination intensities using substantially less power than is required by the emissive display technologies of the prior art. See, for example, commonly assigned EP. Pat. No. 553,496, entitled "ORGANIC ELECTROLUMINESCENT IMAGE DISPLAY DEVICE", filed on December 29, 1992 by Tang et al. and commonly assigned EP. Pat. No. 550,063 entitled "METHOD OF MAKING AN ORGANIC ELECTROLUMINESCENT DEVICE" filed on December 29, 1992 by Hryhorenko et al. Such organic light emissive displays are being rapidly developed for use in portable electronic devices and other low power applications.

Although the use of organic light emissive displays greatly reduces the power requirements of an emissive light display, there is a desire to further reduce the amount of power required to operate an emissive light display. This can be done, for example, to extend the operation of a handheld or portable device having a finite supply of electrical energy. For example, certain users of portable electronic devices have expressed dissatisfaction with the short life of batteries that are used in such devices and/or the need to frequently recharge the batteries in such devices. One example of an apparatus and method to further reduce the amount of power required to operate in emissive light display is described and claimed in commonly assigned and co-pending patent EP. Pat. App. No. 02076563.2, entitled "DISPLAY DRIVER AND METHOD FOR DRIVING AN EMISSION DISPLAY" filed in the name of David L. Funston on April 22, 2002, it is proposed to reduce the amount of power required to operate an emissive display by reducing the amount of power consumed by the driver of the display.

Another example of an apparatus that is used to reduce the power required to operate emissive display is shown in U.S. Pat. No. 5,977,704 entitled ORGANIC ELECTROLUMINESCENT DISPLAY WITH ICONS filed October 28, 1996 in the name of Shi et al. which provides an organic electroluminescent device having a first display region for displaying icon information and a second display region for displaying other information. In the first region, the electroluminescent display elements are shaped in the form of the icons and therefore, when a particular display element illuminates, the user of the device sees the form of the icon. In the second region an array of pixilated display elements is provided for the display of images formed from a pattern of pixels. Using such a display, the illumination of icons can be maintained while the power consuming driver and individual elements of the pixilated display can be disabled.

It will be appreciated that additional and/or alternative methods for reducing the power consumed in presenting an image using an emissive light display remain desirable.

In accordance with one aspect of the present invention, what is provided is a method for displaying an image using a matrix display of picture elements that radiate light in response to the application of power. In this method, a display mode is selected from at least a first and a second mode. The image is presented on the display when the first mode is selected and the image is presented in a modified form when a second mode is selected. The image is modified so that presenting the image in the second mode consumes less power than presenting the image in the first mode.

In another aspect, what is provided is a method for displaying an image using a matrix display of picture elements that radiate light in response to the application of power. In this method, the status of a display mode condition is detected and a display mode is selected from at least a first and second mode based upon the status of the display mode condition. The image is presented on the display when the first mode is selected. The image is presented in a modified form when a second mode is selected. The image is modified so that presenting the image in the second mode consumes less power than presenting the image in the first mode.

In another aspect what is provided is an image display driver for a matrix display of picture elements that radiate light in response to the application of power. The driver has a signal processor for receiving an image and processing the image for presentation on the display in accordance with one of at least a first mode and a second mode. The signal processor modifies the appearance of the image as presented in the second mode so that the presentation of the image in the second mode consumes less power than the presentation of the same image in the first mode. A device controller determines a display mode for displaying the image and generates a display mode selection signal. The signal processor processes the image in a mode indicated by the display mode selection signal.

In still another aspect what is provided is an image display driver for use with an image displaying device having an image source and a matrix display of light emitting elements. The image display driver has a set of element drivers adapted to control the illumination intensity of the elements. A signal processor receives an image from the image source and processes the image for presentation on the display in accordance with one of at least a first mode and a second mode, with the processor modifying the appearance of the image as presented in the second mode so that the presentation of the image in the second mode consumes less power than the presentation of the same image in the first mode. A device controller determines a display mode condition and generates a display mode selection signal based upon the display mode condition. The signal processor processes the image in a mode selected by the mode selection signal.

In accordance with a further embodiment of the present invention, an image display driver is provided for use in an imaging device having a matrix display of light emitting elements and an image source. The image display driver comprises a set of element drivers adapted to control illumination intensity of the elements. A signal processor receives an image from the image source and processes the image for presentation on the display. A device controller determines a display mode condition to generate the display mode selection signal based upon the display mode condition. A display controller controls the operation of the element driver and modifies the operation of the element driver in response to the display mode selection signal with the display controller being operable to control the element driver in at least a first mode and a second mode. The display controller modifies the operation of the set of element drivers in the second mode so that the presentation of an image in the second mode consumes less power in the presentation of the same image in the first mode.

Fig. 1 shows an example embodiment of an electronic device having a display driver and an emissive light display.

Fig. 2 shows an example of a method in accordance with the present invention.

Fig. 3a shows an image presented in a first mode.

Fig. 3b shows the image of Fig. 3a presented in a sub-scanned form.

Fig. 4a shows an image presented in a first mode.

Fig. 4b shows the image of Fig. 4a presented in a sub-scanned form.

Fig. 4c shows the image of Fig. 4a presented in another sub-scanned form.

Fig. 4d shows the image of Fig. 4a presented in still another sub-scanned form.

Fig. 5a shows an image presented in a first mode.

Fig. 5b shows the image of Fig. 5a presented in sub-scanned form. Fig. 6a shows an example of an image presented in three colors.

Fig. 6b shows the image of Fig. 6a presented in one color.

Fig. 7a shows an image presented in a first mode associated with a display mode condition having a status in a first range.

Fig. 7b shows the image of Fig. 7a presented in a second mode associated with a display mode condition having a status in a second range.

Fig. 7c shows the image of Fig. 7a presented in a third mode associated with a display mode condition having a status in a third range.

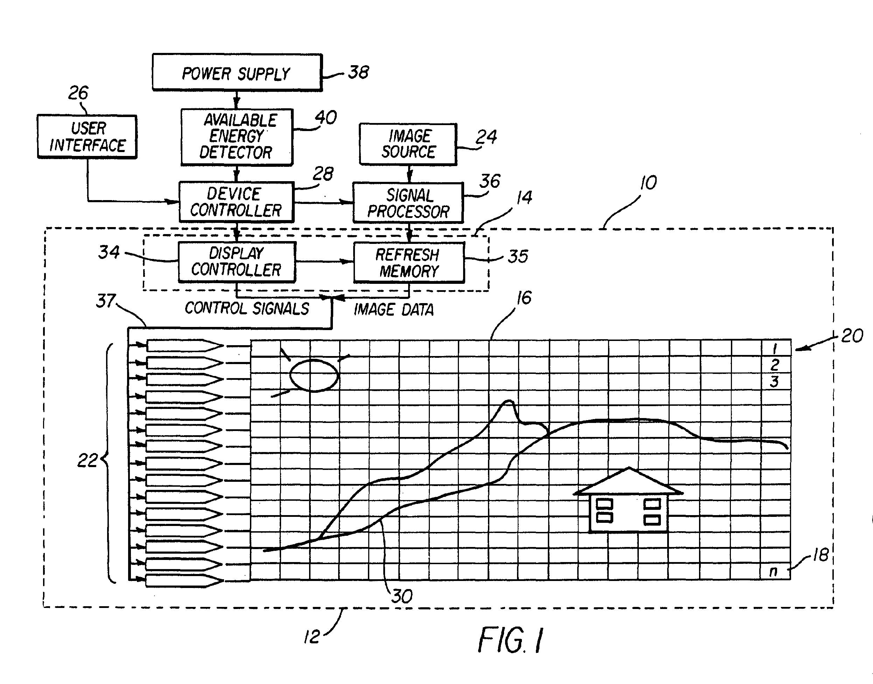

Fig. 1 shows an emissive light display system 10 of the present invention for use in an electronic device 12. In this embodiment, emissive light display system 10 has a display driver 14 and an organic emissive light display 16 having light emitting elements 18. In the embodiment shown in Fig. 1, light emitting elements 18 are organized into a vertical array of "n" horizontal rows 20. Each horizontal row 20 of light emitting elements 18 is associated with one of a plurality of element drivers 22. Each of the element drivers 22 causes light emitting elements 18 of one of horizontal rows 20 with which it is associated to illuminate in accordance with illumination values that are transmitted to the element driver 22.

Electronic device 12 includes an image source 24. Image source 24 can take a variety of forms including, but not limited to, an electronic, magnetic or optical image storing memory, an image capture device incorporating an image such as a Charge Coupled Device, CMOS sensor or Charge Injection Device, or a network connection such as an Ethernet or token ring network from which one or more images are supplied. A signal processor 36 receives images from image source 24 and processes the images to provide illumination values that can be transmitted to element drivers 22. Where emissive light display 16 is called upon to present the same image over a period of time, it may be necessary to continually retransmit the illumination values for that image to the element drivers 22 that are used to present the image. This is referred to as refreshing the image. To simplify the task of refreshing an image, a refresh memory 35 is provided. Refresh memory 35 stores illumination values associated with an image so that the illumination values can be retransmitted to the element drivers 22 in order to refresh the images without requiring the signal processor 36 to repeatedly generate illumination values for the same image. In the embodiment shown, all illumination values that are transmitted to element drivers 22 pass through refresh memory 35.

A device controller 28 is provided. The device controller 28 is an electronic system such as a microcomputer or microcontroller based electronic control system. In the embodiment shown, device controller 28 determines the status of at least one display mode condition and generates a display mode signal. Device controller 28 can be dedicated to the tasks of determining the status of at least one display mode condition and generating a display mode signal. Device controller 28 can also be used to control other systems of the electronic device 12.

The display mode signal is transmitted to a signal processor 36. As will be described in greater detail below in one embodiment, the signal processor 36 is operable in one of at least two modes, a first mode and at least one second mode. When signal processor 36 is operated in a mode other than the first mode, it converts an image to be displayed into a set of illumination values that cause emissive light display 16 to present a version of the image having an appearance that is modified so that presenting the image on the emissive light display 16 in the second mode consumes less power than presenting the image in the first mode. In this embodiment, the display mode signal is used by signal processor 36 to select from between the available modes.

The display mode signal is also transmitted to a display controller 34. Display controller 34 generates signals that operate element drivers 22. More specifically, in the embodiment that is shown, display controller 34 is defined so that it generates a signal that causes one of the element drivers 22 to become receptive to illumination values transmitted by refresh memory 35. This signal is transmitted to the element drivers 22 using common bus 37. Display controller 34 also transmits a signal to refresh memory 35 causing refresh memory 35 to transmit the illumination values for light emitting elements 18 of horizontal row 20 of elements with which the receptive one of element drivers 22 is associated. These illumination values are also transmitted along common bus 37. The receptive one of element drivers 22 receives these code values and causes the individual light emitting elements 18 of horizontal row 20 with which the receptive row driver is associated to illuminate in accordance with the illumination values. The other element drivers 22 ignore the illumination values being transmitted by common bus 37. This process is then repeated for each one of the element drivers 22. In this way, the common bus 37 can be used to transmit illumination values to all of element drivers 22 and separate electrical connections between each of element drivers 22 and refresh memory 35 are not required.

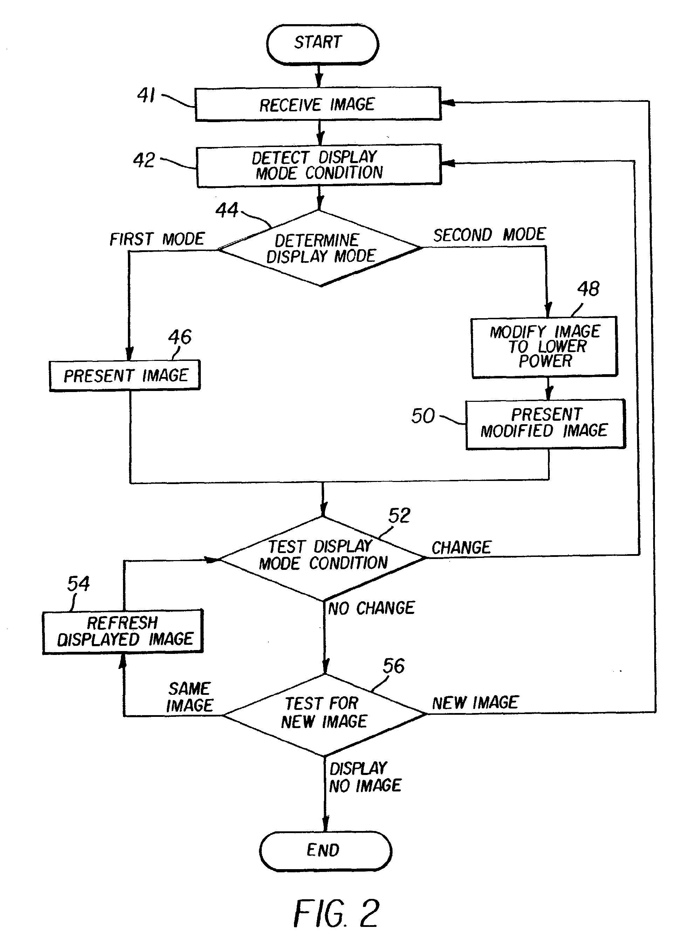

Fig. 2 shows a method for operating display driver 14 in accordance with the present invention. As a shown in Fig. 2, display driver 14 receives at least one image for presentation on emissive light display 16. (Step 41) A display mode condition is then determined. (Step 42) A display mode selection is made on the basis of the display mode condition. (Step 44)

In one embodiment, the display mode condition is the status of a user interface 26 such as a switch, dial, or other transducer that converts an input action by a user into a condition that can be detected by device controller 28. Device controller 28 detects the condition of user interface 26 and generates a mode selection signal in response. In this embodiment, the user of electronic device 12 can determine the display mode by altering the condition of user interface 26.

Alternatively, the display mode condition can comprise an electrical or other signal that is generated by a component of electronic device 12. For example, device controller 28 can monitor the use of electronic device 12 and can develop a profile of the way in which the display is typically used. This profile can be used to help device controller 28 select a display mode signal. In one embodiment of this type, device controller 28 determines whether to select a particular mode based upon the current pattern of use of electronic device 12 and the patterns that are recorded in the profile.

In another example, a display mode condition is generated based upon the elapse of time. Electronic device 12 has a device controller 28 that is adapted to determine when a period of time has elapsed. In this example, the device controller 28 determines the elapse of the time period and generates a mode selection signal that causes signal processor 36 to process images in accordance with the second mode. The time period can be reset by, for example, manipulation of user interface 26. In another example, the signal processor 36 can be adapted to detect when a new image has been provided by image source 24 and can generate a new image signal which is transmitted to the device controller 28. In this embodiment, device controller 28 detects the new image signal and resets the time period when the new image signal is received. When the time period is reset, the output signal ceases and signal detector 32 generates an output signal that causes signal processor 36 to display images in a first mode.

In still another alternative embodiment, the display mode condition is derived from the amount of energy available to electronic device 12. In one example of this type, electronic device 12 has a power supply 38 such as a battery and an available energy detector 40. Available energy detector 40 is an electronic device that monitors the amount of energy available in power supply 38 and generates a signal that is representative of the available energy in the power supply 38. This available energy signal is then supplied to the device controller 28. Available energy detector 40 can, for example, comprise a voltage detector that monitors the voltage level provided by power supply 38. However, it will be appreciated that the amount of energy remaining in a power supply 38 can be determined in other ways.

In the embodiment shown in Fig. 2, and the above described examples, the display driver 14 is operable in two modes. In a first mode, an image is transmitted to display driver 14, is presented on emissive light display 16 in a form that is intended to accurately represent the image, and presented to display driver 14. (Step 46) In a second mode the image is modified. (Step 48) The modification changes the appearance of the image so that the amount of electrical power used to display the modified image on emissive light display 16 is less than the amount of power that is required to present the same image on display 16 in the first mode. The modified image is then presented on emissive light display 16. (Step 50) The display mode that is selected is a function the state of the display mode condition. Where it is possible that the state of the display mode condition can change during the presentation of an image on emissive light display 16, the state of the display mode condition is repeatedly tested while the image is displayed. (Step 52) Emissive light display 16 remains in the selected mode and the image is periodically refreshed unless the display mode condition changes. (Step 54) In the embodiment shown, the display mode can also be changed by receipt of the new image for presentation on emissive light display 16 or by instructions to display no image. (Step 56)

There are various way in which the appearance of an image can be modified to reduce the power that is consumed by emissive light display 16 during the presentation of an image. In this regard it will be appreciated that in order to form and sustain an image on an emissive light display 16, it is necessary to supply electrical power to each of the picture elements 18 that are illuminated to form the image. The total amount of electrical power that is required to present an image on emissive light display 16 is therefore the sum of the amount of electrical power provided to each of light emitting elements 18. It will be appreciated from this that it is possible to reduce the total amount of power required to present an image using emissive light display 16 by reducing the number of light emitting elements 18 used to present the image on emissive light display 16 and/or by reducing the a amount of light emitted by light emitting elements 18. The following embodiments detail methods for modifying the appearance of an image so that the amount of power required to present the modified image on emissive light display 16 is lower than the amount of power required to present the same image in a non-modified form.

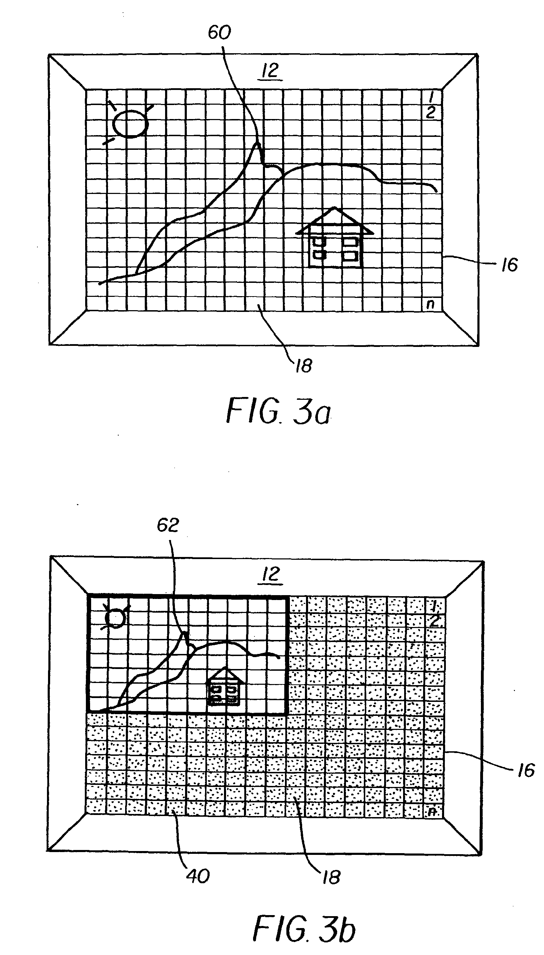

Figs. 3a shows an original image 60, presented on emissive light display 16. Fig. 3b shows a modified image 62 that represents image 60 after modification to reduce the amount of power required to present the image on the emissive light display 16. In this embodiment, the step of modifying the appearance of the image, (step 48) is performed by reducing the overall number of light emitting elements 18 required to present the image on the emissive light display 16. In this example, Fig. 3a shows an image 60 presented in a first mode. In this mode, the display of image 60 requires the use of an array of 480 rows of 640 light emitting elements 18. In the second mode, shown in Fig. 3b, image 60 is modified by the signal processor 36 to form a modified image 62 that is presented using an array of 240 rows of 320 light emitting elements 18. As displayed, modified image 62 uses one-fourth as many light emitting elements 18 as are used display image 60. This reduces the number of light emitting elements 18 to which power is supplied and reduces the overall amount of power required to present the image on the emissive light display 16. In this embodiment, the illumination values contained in image 60 have been compressed for presentation in the second mode. This can be done, for example, by electronically undersampling the imaging information used in the formation of image 60. Modified image 62 is undersampling the illumination values of image 60 on a four to one basis. Other compression schemes and strategies can be used. It will be appreciated that other ratios of compression can be used. It will be appreciated that an advantage of such compression is that the overall information content of image 60 is essentially preserved in modified image 62.

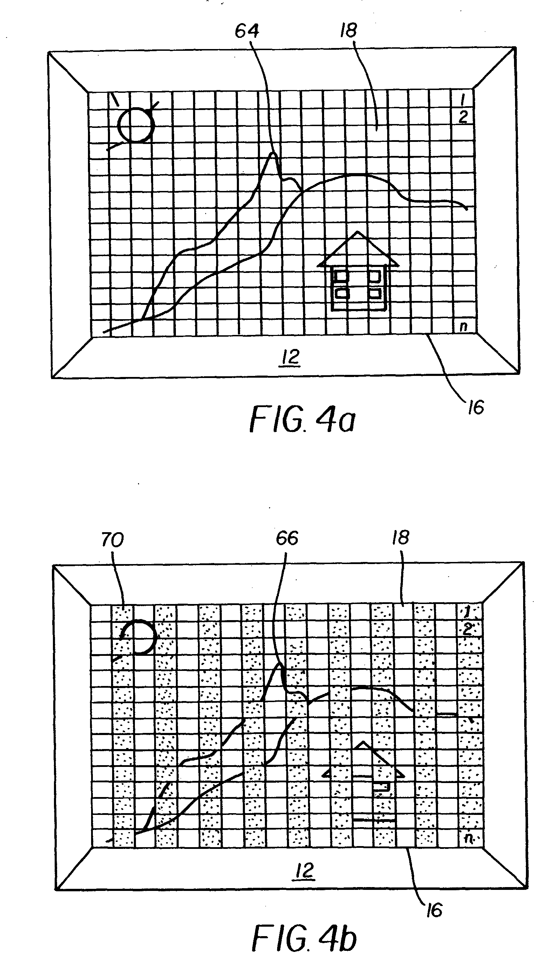

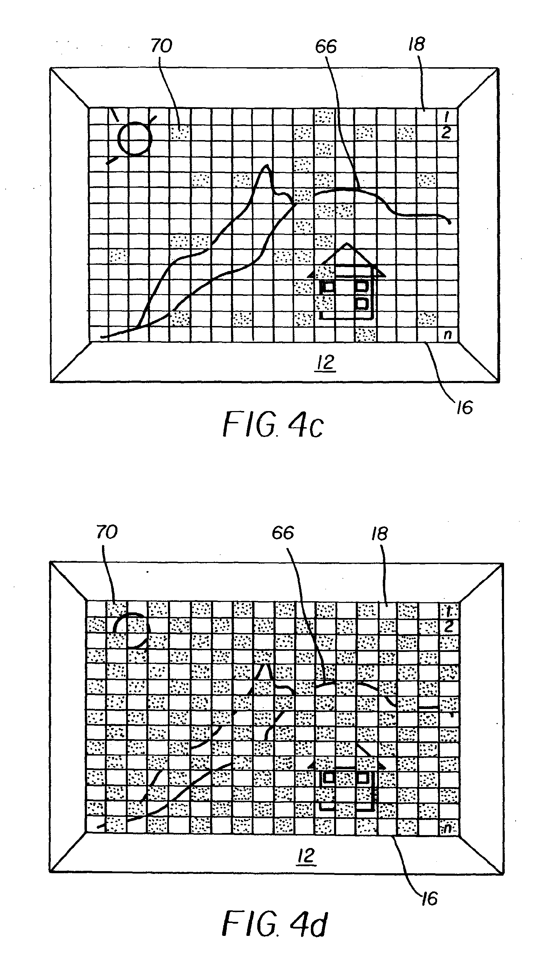

The step of modifying the appearance of the image (step 48) can also be performed by reducing the number of light emitting elements 18 used in presenting the image by sub-scanning the original image 60 to present a limited portion of an original image. Various sub-scanning approaches can be used. In the embodiment of Figs. 4a and 4b, image 64 is sub-scanned to form a modified image 66 that is limited by blocking selected ones of light emitting elements 18 from illuminating. The embodiment shown in Fig. 4b, one-half of light emitting elements 18 of emissive light display 16 are not used to present the modified image 66. In the embodiment of Fig. 4b these unused elements are arranged in rows of elements distributed throughout the display. An advantage of this embodiment is that this embodiment provides a modified image 66 having the same overall size as image 64 and thus is more easily seen at a distance. As is shown in Figs. 4c, and 4d, a variety of sub-scanning patterns can be used to effectively reduce the number elements that are illuminated when image 64 is presented on emissive light display 16.

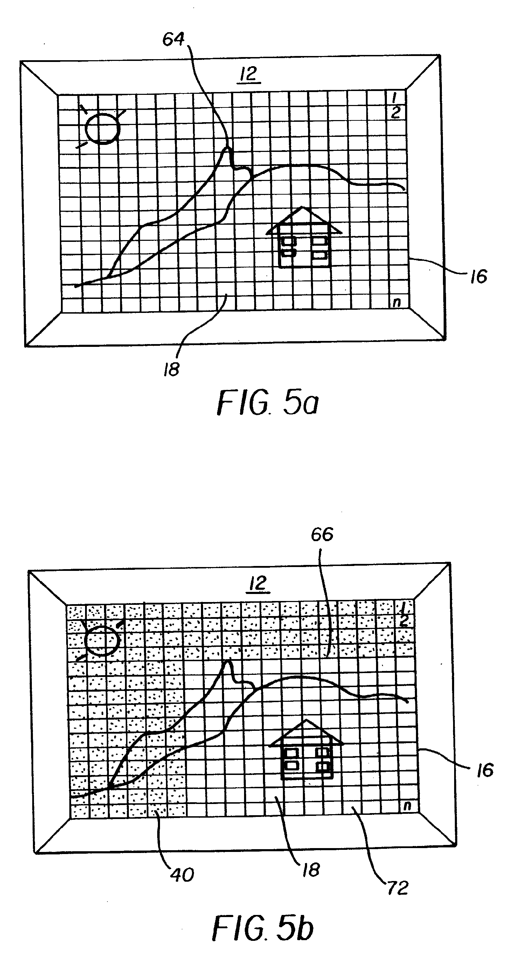

Figs 5a and 5b show yet another sub-scanning method. In this method a subject 72 of image 64 is determined and the image is sub-scanned so that only the subject area 72 is shown.

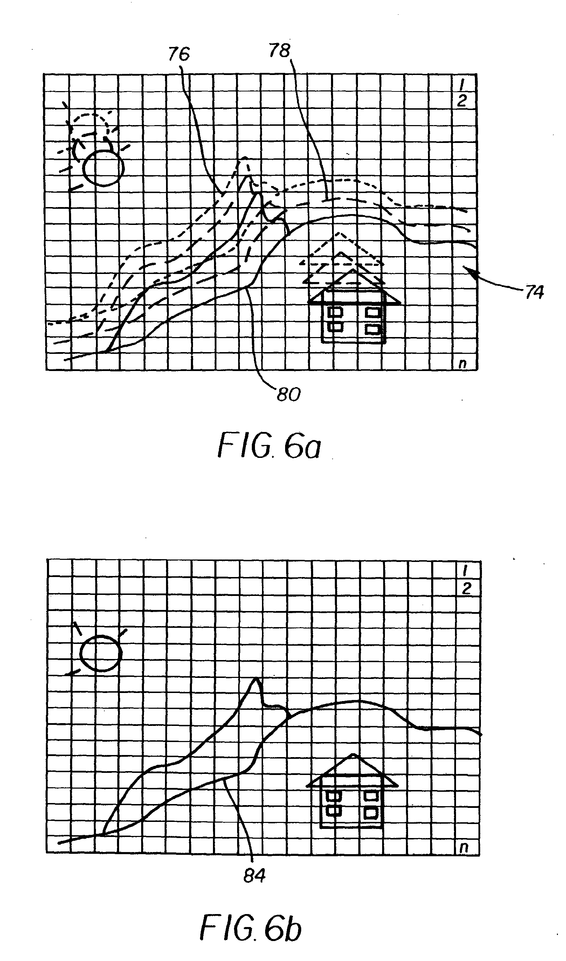

As is shown in Fig. 6a, color light emissive display 16, a color image 64 is typically formed for presentation on the light emitting display 16 by combining light from three adjacent light emitting elements 18, each radiating light in one of three primary colors such as red, blue and green. Because light emitting elements 18 are in close proximity, their individual colors appear to blend. Thus, by varying the intensity of the light radiated in each primary color, it is possible to provide an image 74 having an apparent range of colors that is very broad. However, this means that every such color image 68 is formed from a set of three differently colored images, a red image 76, a green image 78 and a blue image 80. The step of modifying the appearance of the image (step 48) can comprise presenting modified image 84 having, for example, only those elements of image 74 that radiate one of the primary colors. For example, because the human eye is most sensitive to green, a green image can be provided as is shown in Fig. 6b. In this embodiment, only the green image 80 is formed on emissive light display 16. Under certain circumstances, this change effectively reduces the amount of power required to display modified image 84 by a factor of 66% as compared to the amount of power that is required to display the image in an unmodified form. It will be recalled that the amount of power required to present an image on emissive light display 16 of light emitting elements 18 is a function of both the number of elements used in the presentation of the image and the amount of light emitted by the elements. The power required to illuminate light emitting element 18 increases as the amount of light radiated by element increases. Thus, in an alternative embodiment of the present invention, the step of modifying the appearance of the image (step 48) can also comprise reducing the luminous output of the light emitting elements 18 of the emissive light display 16 used to present an image. In one example, the upper limit of the range of illumination intensities used in presenting an image can be reduced. The upper limit can be reduced to an arbitrary level so that none of light emitting element 18 will radiate light above a certain level. In another example, the overall brightness of the image can be lowered.

In any of these sub-scanning embodiments, the sub-scanning can be performed by using signal processor 36 to modify the way in which it converts an image into illumination values. Alternatively, it is possible to perform sub-scanning by programming element drivers 22 so that they are operable in a first mode to illuminate a full set of the elements of emissive light display 16 that are used in displaying an image, and in a second mode where element drivers 22 illuminate less than all of light emitting elements 18 in the full set. Signal processor 36 or display controller 34 can transmit a signal to such element drivers 22 to select their mode of operation. Where element drivers 22 are operated in this manner, it is not necessary to use signal processor 36 to modify the way in which the image is converted into illumination values.

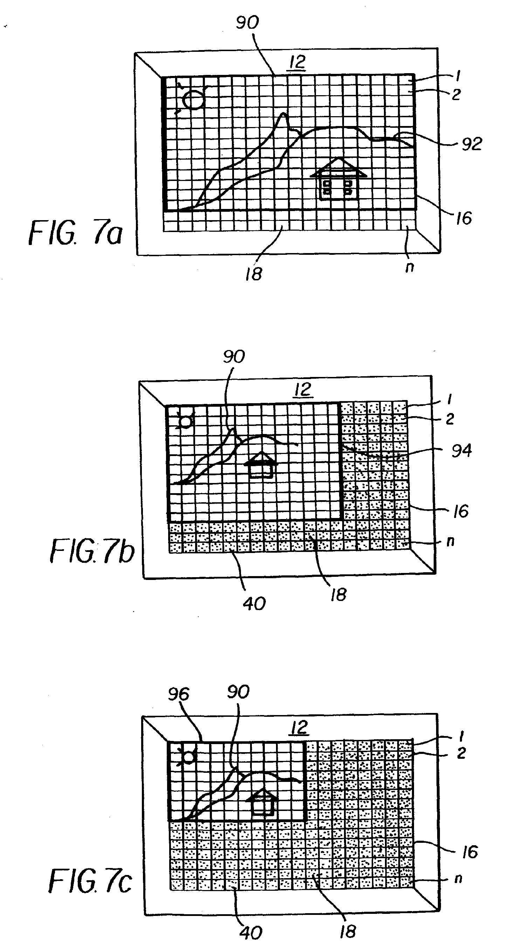

It will be appreciated that consistent with the present invention, more than one power saving mode can be selected. This can be done, for example, to indicate the state of a display mode condition. Such an embodiment can be useful in indicating, for example, when the amount of energy remaining in a power supply is within a relatively high range. In one embodiment of this type, an image 90 is displayed using a first set of light emitting elements 92 of the light emitting elements 18 of emissive light display 16 In this embodiment, when the amount of energy remaining is within a second range, a second set of light emitting elements 94 of light emitting elements 18 are used as is shown in Fig. 7b.

When the amount of energy remaining in power supply 38 reaches a third range, a third set of light emitting elements 96 of light emitting elements 18 is used to display image 90. In this embodiment, the third set of light emitting elements 96 of light emitting elements 18 is a sub-set of second set 94 of light emitting elements 18. Second set 94 is a sub-set of the first set of light emitting elements 92 of light emitting elements 18.

A useful embodiment of this type can be used where electronic device 12 comprises a camera for capturing images of a scene using an image source 24 such as a CCD or CMOS imager. In such an embodiment, user input 26 comprises a shutter switch that is movable from a non-image capture position, to a viewfinder position and into an image capture position. Device controller 28 monitors the position of the switch when the switch is moved from the non-image capture position to the viewfinder position. Controller 28 causes image source 24 to capture a stream of images of a photographic scene. Device controller 28 also generates a display mode signal causing a sub-sampled version of the image in the stream to appear on light emissive display 16. This allows the user to use emissive light display 16 as a viewfinder but without consuming an undue amount of power. Movement of the switch into the capture position is also detected by device controller 28. In response, device controller 28 causes an image from the stream of images to be stored, and generates a display mode signal causing the stored image to be displayed in an unmodified form.

## Claims

1. A method for displaying an image using a matrix display of picture elements that radiate light in response to the application of power, the method comprising the steps of:
selecting a display mode from at least a first and second mode;
presenting the image on the display when the first mode is selected; and;
presenting the image in a modified form when a second mode is selected wherein the image is modified so that presenting the image in the second mode consumes less power than presenting the image in the first mode.

2. The method of claim 1, wherein the step of selecting a display mode comprises obtaining a user power consumption profile and comparing the use of the display to the profile, and selecting a display mode based upon the profile and the current usage of the display.

3. The method of claim 1, wherein the step of presenting a modified image comprises modifying the image by sub-scanning the image.

4. The method of claim 1, wherein said matrix display comprises an array of more than one different colored sets of light emitting elements operated to render combination colors and the step of presenting a modified image comprises presenting the image using only one of the colored sets of colored light emitting elements.

5. A method for displaying an image using a matrix display of picture elements that radiate light in response to the application of power, the method comprising the steps of:
detecting the status of a display mode condition;
selecting a display mode from at least a first and second mode based upon the status of the display mode condition;
presenting the image on the display when the first mode is selected; and;
presenting the image in a modified form when a second mode is selected wherein the image is modified so that presenting the image in the second mode consumes less power than presenting the image in the first mode.

6. The method of claim 5, wherein the step of detecting the status of a display mode condition comprises detecting the amount of energy remaining in a power supply.

7. The method of claim 6, wherein the size of the modified image presented on the display is proportional to the amount of energy remaining in the power supply.

8. An image display driver for a matrix display of picture elements that radiate light in response to the application of power, the driver comprising:
a signal processor for receiving an image and processing the image for presentation on the display in accordance with one of at least a first mode and a second mode, with the signal processor modifying the presented appearance of the image in the second mode so that the presentation of the image in the second mode consumes less power than the presentation of the same image in the first mode; and,
a device controller for determining a display mode for displaying an image and generating a display mode selection signal,
wherein said signal processor processes the image in a mode indicated by the mode selection signal.

9. An image display driver for use in an imaging device having a matrix display of light emitting elements, and an image source, the image display driver comprising:
a set of element drivers adapted to control the illumination intensity of the elements;
a signal processor adapted to receive an image from the image source and processes the image for presentation on the display in accordance one of at least a first mode and a second mode with the signal processor modifying the appearance of the image as presented in the second mode so that the presentation of the image in the second mode consumes less power than the presentation of the same image in the first mode;
a device controller adapted to determine a display mode condition and to generate a display mode selection signal based upon the display mode condition; and
a signal processor adapted to process the image in a mode selected by the mode selection signal.

10. An image display driver for use in an imaging device having a matrix display of light emitting elements and an image source, the image display driver comprising:
a set of element drivers adapted to control illumination intensity of the elements;
a signal processor adapted to receive an image from the image source and process the image for presentation on the display;
a device controller adapted to determine a display mode condition and to generate the display mode selection signal based upon the display mode condition; and
a display controller adapted to control the operation of the element drivers and to modify the operation of the element drivers in response to the display mode selection signal, the display controller being operable to control the element drivers in at least a first mode and a second mode, with the display controller modifying the operation of the set of element drivers in the second mode so that the presentation of an image in the second mode consumes less power in the presentation of the same image in the first mode.
